(19)

Europäisches
Patentamt
European
Patent Office
Office européen
des brevets

(11) **EP 2 196 512 B1**

(12) **EUROPEAN PATENT SPECIFICATION**

(45) Date of publication and mention
of the grant of the patent:
**07.02.2018 Bulletin 2018/06**

(51) Int Cl.:
***C09J 7/02*** *(0000.00)*    ***C08K 5/00*** *(2006.01)*

(21) Application number: **09178909.9**

(22) Date of filing: **11.12.2009**

(54) **Paint film-protecting sheet**

Farbschichtschutzfolie

Feuille de protection de film de peinture

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **12.12.2008 JP 2008316944**

(43) Date of publication of application:
**16.06.2010 Bulletin 2010/24**

(73) Proprietors:
• **Nitto Denko Corporation
Ibaraki-shi,
Osaka 567-8680 (JP)**
• **Kansai Paint Co., Ltd
Amagasaki-shi,
Hyogo 661-8555 (JP)**

(72) Inventors:
• **Suzuki, Toshitaka
Ibaraki-shi Osaka 567-8680 (JP)**

• **Saitou, Yuki
Ibaraki-shi Osaka 567-8680 (JP)**
• **Igarashi, Takeshi
Ibaraki-shi Osaka 567-8680 (JP)**
• **Hanaki, Ikko
Ibaraki-shi Osaka 567-8680 (JP)**
• **Kondo, Masahiro
Amagasaki Hyogo 661-8555 (JP)**
• **Hirano, Yoshikuni
Amagasaki Hyogo 661-8555 (JP)**

(74) Representative: **Grünecker Patent- und
Rechtsanwälte
PartG mbB
Leopoldstraße 4
80802 München (DE)**

(56) References cited:
**US-A1- 2005 084 640    US-A1- 2008 199 704
US-B1- 6 872 447**

**Description**

BACKGROUND OF THE INVENTION

1. Field of the Invention

The present invention relates to a sheet for protecting a paint film from damage such as scratches and dirt, and to a substrate for such a sheet. The invention relates in particular to a paint film-protecting sheet well-suited for use in protecting the surface of, for example, the outer paint film on an automotive body, construction materials and painted steel sheets, and to a substrate for such a sheet.

2. Description of the Related Art

Technology is known for bonding a protective sheet to the paint film of articles having a paint film (e.g., painted automobiles and automotive components, sheet metal such as sheet steel and shaped articles thereof) in order to prevent damage to the paint film (e.g., scratching, loss of gloss or discoloration of the paint film caused by suspended or impinging solids such as dirt, dust, rain and pebbles) when, for example, transporting, storing, curing and constructing (sometimes collectively referred to below as "transporting, etc.") the articles. Paint film-protecting sheets used for such a purpose generally have a pressure-sensitive adhesive (PSA) layer on one side of a sheet-like substrate, and are constructed in such a way as to enable the aim of protection to be achieved by bonding of the sheet to the adherend surface (the paint film to be protected) via the PSA layer. This type of paint film-protecting sheet has been described in the prior-art, including Japanese Patent Application Publication Nos. H6-73352 and H8-143838.

US 6872447 discloses a pressure-sensitive adhesive sheet for surface protection comprising a three-layered film in which a layer A, a layer B and a layer C have been laminated in this order and a pressure-sensitive adhesive layer on the layer C; wherein the layer A contains a polyethylene polymer in an amount of at least 60% by weight based on a total weight of the layer A; the layer B contains an ethylene/propylene copolymer in an amount of at least 50% by weight based on a total weight of the layer B; and the layer C contains a hydrogenated styrene/diene hydrocarbon random copolymer in an amount of at least 10% by weight based on a total weight of the layer C.

US 2005/084640 relates to a composite construction for use as a label or a tape comprising a first substrate, said first substrate having a face side and an underside opposite said face side; an adhesive layer; and a barrier layer adhered to the underside of said first substrate and positioned between said first substrate and said adhesive layer, said barrier layer comprising a radiation cured acrylated epoxy derived from at least one acrylated epoxy oligomer and at least one reactive diluent selected from N-vinyl-2-pyrrolidone and N-vinylcaprolactam, wherein said barrier layer being substantially impervious to migratory components in said first substrate.

SUMMARY OF THE INVENTION

Such paint film-protecting sheets (especially paint film-protecting sheets employed in vehicles such as automobiles and in other large articles) are sometimes used in such a manner as to be left for a long time in an environment where they are exposed to ultraviolet light at elevated temperatures, e.g., on a rooftop in the summer. To protect not only the paint film but also the protective sheet itself from deterioration by heat and ultraviolet light, paint film-protecting sheets (also referred to below as "protective sheets") designed with such a manner of use in mind have formulated therein various types of additives (weathering stabilizers) for increasing the resistance to deterioration by heat and ultraviolet light (i.e., weatherability). This is because if the substrate or the PSA making up the protective sheet deteriorates, when the protective sheet is peeled (removed) from the surface of the paint film, undesirable effects tend to arise; for example, some of the PSA may remain on the surface of the paint film (adhesive transfer), or the substrate may become brittle so that the protective sheet tears in the middle, making it more difficult to peel off. Advantageous use may be made of substrates which contain, for example, inorganic weathering stabilizers such as titanium oxide in combination with organic weathering stabilizers such as light stabilizers and ultraviolet absorbers.

Such weathering stabilizers generally have a tendency to achieve higher effects when added in larger amounts. Therefore, in cases where a protective sheet having a high level of weather resistance is desired, the approach generally taken up until now has been to increase the loading of weathering stabilizers. However, when the loading of weathering stabilizers (especially organic weathering stabilizers) is increased, there is a concern that such weathering stabilizers will migrate from the substrate to the PSA layer and stain the paint film. Hence, there is a tradeoff, that is, the restriction in this way of the loadings of weathering stabilizers places limits on the degree of improvement that can be achieved in the weathering performance, whereas increasing the loadings of weathering stabilizers leads to greater staining of the paint film that is the target of protection.

It is therefore an object of the present invention to provide a paint film-protecting sheet which both achieves a higher level of weatherability and further minimizes staining of the paint film. A further object of the invention is to provide a substrate which is suitable as a constitutional component of such a paint film-protecting sheet.

Accordingly, the invention provides a paint film-protecting sheet composed of a sheet-like substrate and a PSA layer disposed on the substrate. The substrate has a resin layer (layer A), which forms a surface of the substrate, on a PSA layer side and a resin layer (layer B) superimposed on a back side of the layer A, wherein layer A and layer B are primarily composed of a polyolefin or a polyester. The layer B contains an organic weathering stabilizer having a weight-average molecular weight Mw of at least $1.5 \times 10^3$ in a predetermined amount Pb. The layer A either contains no organic weathering stabilizer or contains the organic weathering stabilizer in a predetermined amount Pa which satisfies the condition Pa/Pb $\leq$ 0.5.

In such a protective sheet, the weathering stabilizer is included in the layer B disposed on a back side of the substrate (i.e., the support for the PSA layer), but either is not included in the layer A disposed on the PSA layer side of the substrate or is included in an amount which is one-half or less the amount of organic weathering stabilizer in the layer B. By arranging the weathering stabilizer so as to be present in a greater amount on the side away from the PSA layer (i.e., the outside of the protective sheet), it is possible to reduce (or eliminate) the amount of organic weathering stabilizer present on the PSA layer side surface of the substrate while allowing an amount of organic weathering stabilizer sufficient for obtaining the desired weathering resistance to be present in the substrate as a whole. Staining of the paint film due to the migration of organic weathering stabilizer on the substrate surface to the PSA layer can thus be prevented or minimized. Also, because the weathering stabilizer has a relatively large weight-average molecular weight Mw of at least $1.5 \times 10^3$, unlike lower molecular-weight organic weathering stabilizers, the organic weathering stabilizer in the layer B does not readily diffuse into the layer A. It is thus possible to stably maintain a low organic weathering stabilizer content state at the PSA layer side surface of the substrate. For example, even in a mode of use involving exposure to elevated temperatures after the protective sheet has been affixed, an increase in the amount of organic weathering stabilizer present at the PSA layer side surface on account of organic weathering stabilizer diffusion into the layer B can be suppressed. Moreover, disposing the weathering stabilizer so as to be present in a greater amount on the outside of the protective sheet is useful also for increasing the organic weathering stabilizer utilization efficiency. Therefore, it is possible with the protective sheet of the invention to both achieve a high weather resistance and minimize staining of the paint film.

Preferred use may be made of, for example, a hindered amine-type light stabilizer which satisfies the Mw as the weathering stabilizer. Hindered amine-type light stabilizers (HALS) exhibit a high weathering resistance enhancing effect, but in conventional methods of use have tended to give rise to staining of the paint film. In the present invention as constituted above, by disposing a HALS which satisfies the above weight-average molecular weight Mw condition (a high-molecular-weight HALS) so as to be present in a greater amount on the back side of the substrate, a protective sheet which has a high weather resistance and also minimizes staining of the paint film can be achieved.

The amount Pb of organic weathering stabilizer in the layer B is set to 0.1% to 5% by mass. The layer A contains no organic weathering stabilizer or has an organic weathering stabilizer content Pa of not more than 0.1% by mass; if the layer A contains the organic weathering stabilizer HMS, the ratio Pa/Pb must be 0.5 or less. In a preferred embodiment, the combined amount of the weathering stabilizer included in the substrate, expressed as a proportion Pt of the total mass of the substrate (the organic weathering stabilizer amount in the substrate in total), is at least 0.07% by mass, and is typically from 0.07% to 3% by mass.

It is preferable for the layer A to have a thickness of at least 5 $\mu$m. With a protective sheet thus constituted, the migration of the organic weathering stabilizer in the layer B to the PSA layer can be more reliably prevented. A material containing at least 50% by mass of polyethylene resin (PE) and/or polypropylene resin (PP) may be advantageously used as the material making up the layer A.

In a typical embodiment of the protective sheet disclosed herein, at least one layer making up the substrate contains an inorganic weathering stabilizer. A protective sheet thus constituted is capable of exhibiting a higher weather resistance. The PSA layer is preferably made of a polyisobutylene-based PSA.

The present invention also provides a substrate for use as a constitutional component of a paint film-protecting sheet. This substrate has a resin layer (layer A) which forms a surface of the substrate, and has a resin layer (layer B) superimposed on a back side of the layer A. The layer B contains an organic weathering stabilizer having a weight-average molecular weight Mw of at least $1.5 \times 10^3$ in a predetermined amount Pb. The layer A either contains no organic weathering stabilizer or contains the same in a predetermined amount Pa which satisfies the condition Pa/Pb $\leq$ 0.5. With such a substrate, it is possible to achieve a paint film-protecting sheet which both has a high weather resistance and minimizes staining of the paint film.

BRIEF DESCRIPTION OF THE DRAWINGS

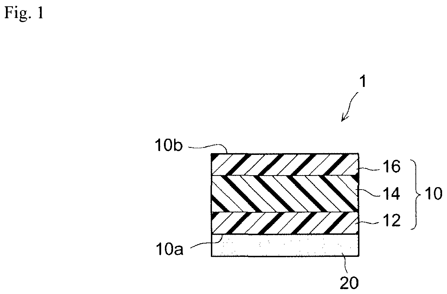

FIG. 1 is a schematic cross-sectional view of one example of constitution of the paint film-protecting sheet according to the present invention.

## DETAILED DESCRIPTION OF THE INVENTION

Preferred embodiments of the invention are described below.

Paint film-protecting sheets according to the present invention (e.g., automotive paint film-protecting sheets used to protect automobiles and automotive components) are composed of a PSA layer disposed on a sheet-like substrate. For example, as shown schematically in FIG. 1, a paint film-protecting sheet 1 is composed of a substrate 10 on one side of which is disposed a PSA layer 20, and is used by affixing the PSA layer 20 to an adherend (an article to be protected; e.g., an article having a paint film, such as an automobile or an automotive component). Prior to use (i.e., before being affixed to the adherend), the protective sheet 1 may be in a form where the surface (bonding face) of the PSA layer 20 is protected with a release liner (not shown) having on at least the PSA layer side thereof a release face. Alternatively, the protective sheet 1 may be in a form where a second side (back side) 10b of the substrate 10 functions as a release face and the protective sheet 1 is wound into a roll so that the PSA layer 20 comes into direct contact with the back side 10b, thereby protecting the surface of the PSA layer 20.

The substrate has a resin layer (layer A) which forms the surface on the PSA layer side thereof, and a resin layer (layer B) superimposed on a back face of the layer A. The layer B may be a single layer or may be composed of two or more layers (layer B1, layer B2, etc.). In a preferred example, as shown in FIG. 1, the substrate 10 has a three-layer construction composed of a layer A (inner layer) 12 which forms a surface 10a on the PSA layer 20 side, a layer B1 (middle layer) 14 which is provided contiguous to a back face of the inner layer A 12, and a layer B2 (outer layer) 16 which is provided contiguous to a back face of the layer B1 and forms a back face 10b of the substrate 10. This substrate 10 has two B layers (middle layer 14 and outer layer 16).

These B layers contain an organic weathering stabilizer. As used herein, "organic weathering stabilizer" denotes an organic material having the function of enhancing the weather resistance of the paint film-protecting sheet, and encompasses the additives generally referred to as light stabilizers, ultraviolet absorbers and antioxidants. Examples of light stabilizers (radical scavengers) include those containing a hindered amine as the active ingredient (HALS). Examples of antioxidants include those containing a phenol derivative (a hindered phenol) or a sulfur compound (an organic sulfur compound) as the active ingredient. Examples of ultraviolet absorbers include those containing benzophenone, a derivative thereof, or a benzotriazole as the active ingredient. The layer B in the art disclosed herein contains at least an organic weathering stabilizer having a weight-average molecular weight Mw of at least $1.5 \times 10^3$. Although no particular limitation is imposed on the upper limit in the weight-average molecular weight Mw of, taking into consideration such attributes as applicability and uniform miscibility with other materials, it is generally preferable to use an organic weathering stabilizer having a weight-average molecular weight Mw of up to $50 \times 10^3$ (e.g., up to $10 \times 10^3$).

The organic weathering stabilizer content Pb of the layer B (average concentration of the layer B overall) may be set, based on the construction of the protective sheet and the likely manner of use, so as to achieve the desired weatherability and minimize staining. Here, Pb can be computed from the following formula:

$$Pb = (\text{mass Wbhms of organic weathering stabilizer in the layer B})/(\text{mass Wb of the layer B}).$$

When the layer B is composed of a plurality of layers, the organic weathering stabilizer may be included in any one of these layers, or may be included in two or more layers (e.g., all the layers). In cases where two or more layers contain the organic weathering stabilizer, the types and amounts of organic weathering stabilizer included in the respective layers may be the same or different. In cases where the layer B is composed of a plurality of layers, Pb may be determined by letting the combined mass of these layers (i.e., the mass of the layer B as a whole) be Wb, letting the mass of organic weathering stabilizer included in the layer B as a whole be Wbhms, and substituting these values into the above formula. Pb is set to 0.1 to 5% by mass. For example, a substrate in which Pb is from 0.12% to 3% by mass (e.g., from 0.15% to 1% by mass) is preferred.

Preferred use may be made of a hindered amine-type light stabilizer (HALS) having a Mw of at least $1.5 \times 10^3$ (typically from $1.5 \times 10^3$ to $50 \times 10^3$, and preferably from $1.5 \times 10^3$ to $10 \times 10^3$, such as from $1.5 \times 10^3$ to $5 \times 10^3$) as the organic weathering stabilizer in the art disclosed here. Illustrative examples include polymers of dimethyl succinate and 4-hydroxy-2,2,6,6-tetramethyl-1-piperidylethanol (TINUVIN™ 622LD, available from Ciba Specialty Chemicals), poly[{6-(1,1,3,3-tetrabutyl)amino-1,3,5-triazine-2,4-diyl} {(2,2,6,6-tetramethyl-4-piperidyl)imino}hexamethylene {(2,2,6,6-tetramethyl-4-piperidyl)imino}] (CHIMASSORB™ 944FDL, available from Ciba Specialty Chemicals), polymers of dibutylamine-1,3,5-triazin-N,N'-bis(2,2,6,6-tetramethyl-4-piperidyl-1,6-hexamethylenediamine and N-(2,2,6,6-tetramethyl-4-piperidyl)butylamine (CHIMASSORB™ 2020FDL, available from Ciba Specialty Chemicals), and N,N',N",N'''-tetrakis-(4,6-bis(butyl-(N-methyl-2,2,6,6-tetramethylpiperidine-4-yl)amino)-triazine-2-yl)-4,7-diazadecane-1,10-diamine. These HALS may be used singly or as combinations of two or more thereof. Substantially all the included in the layer B may be HALS. Alternatively, the layer B may include as the organic weathering stabilizer both a HALS and another organic weathering stabilizer.

In a preferred embodiment of the art disclosed herein, the layer A of the substrate contains substantially no organic weathering stabilizer. That is, the organic weathering stabilizer content Pa of the layer A (organic weathering stabilizer concentration of the layer A) is substantially 0. This embodiment of the invention enables a paint film-protecting sheet having a particularly low-staining tendency (low paint film-staining) to be provided. In another preferred embodiment of the art disclosed herein, the layer A contains in an amount Pa which is not more than 0.5×Pb. Here, Pa may be computed from the following formula:

$$Pa = (\text{mass Wahms of organic weathering stabilizer in the layer A})/(\text{mass Wa of the layer A}).$$

A substrate in which the ratio Pa/Pb between the contents of the layer A and layer B is not more than 0.5 (typically from 0 to 0.5) is preferred. With a substrate constituted in this way, it is possible to obtain a paint film-protecting sheet that achieves a good balance between a higher weather resistance and lower staining of the paint film. A substrate in which the ratio Pa/Pb is not more than 0.25 (typically from 0 to 0.25) is even more preferred.

If the layer A contains the organic weathering stabilizer, it is generally preferable for Pa to be set to not more than 0.1% by mass. Pa is more preferably 0.07% by mass or less, and even more preferably 0.05% by mass or less. The organic weathering stabilizer included in the layer A and the organic weathering stabilizer included in the layer B may be of the same type or may be different. It is also possible for a plurality of types of organic weathering stabilizer to be included in the layer B, and for only some of these types to be included in the layer A. For example, advantageous use may be made of an embodiment in which the layer A contains as the organic weathering stabilizer the same type of HALS as the layer B.

Based on the construction of the protective sheet and the expected manner of use, the organic weathering stabilizer content Pt for the substrate as a whole (i.e., the average organic weathering stabilizer concentration for the entire substrate) may be set so as to achieve the desired weathering resistance and minimize staining. Here, Pt can be computed from the following formula:

$$Pt = (\text{mass Wthms of organic weathering stabilizer in entire substrate})/(\text{mass Wt}$$

$$\text{of entire substrate}).$$

Generally, it is suitable for Pt to be set to at least 0.07% by mass (typically from 0.07% to 3% by mass). A substrate containing from 0.1% to 2% by mass of Pt is preferred, and a substrate containing from 0.1% to 1% by mass is more preferred. The amount of Pt may even be from 0.1% to 0.5% by mass (e.g., from 0.1% to 0.2% by mass).

The amount and weight-average molecular weight of the organic weathering stabilizer included in the substrate or in a resin layer of the substrate can be determined by, for example, extracting the substrate or layer with a suitable organic solvent and analyzing the extract.

Each of the resin layers making up the substrate may be, for example, a layer composed primarily of a resin ingredient such as polyolefin and polyester. The compositions of the resin ingredients making up the respective layers may be the same or different. For example, the substrate may be one which includes a plurality of layers having substantially the same resin composition in which only the makeup of the additives (organic weathering stabilizers, pigments, etc.) differs. From the standpoint of preventing undesirable effects such as warping of the protective sheet, it is preferable to use a substrate 10 constructed in such a way that, for example, the inner layer 12 and the outer layer 16 shown in FIG. 1 have substantially the same resin composition and an middle layer 14 with a different resin composition is disposed therebetween. It is preferable for the thickness of the inner layer 12 and the thickness of the outer layer 16 to be substantially the same.

The art disclosed herein may be advantageously employed in paint film-protecting sheets in which the primary component in the overall substrate is a polyolefin resin, i.e., in which a polyolefin resin sheet serves as the substrate. A substrate having such a composition is preferred also from the standpoint of recyclability. For example, advantageous use may be made of a polyolefin resin sheet in which at least 50% by mass of the overall substrate is polyethylene resin or polypropylene resin. In one preferred embodiment, polypropylene resin accounts for at least 60% by mass of the overall substrate. Alternatively, polypropylene resin accounts for preferably at least 50% by mass, and more preferably at least 60% by mass, of the resin ingredients in the substrate. The balance of the resin ingredients may be polyolefin resins other than polypropylene resin, such as a polyethylene resin.

The polypropylene resin may be a resin composed primarily of various polymers containing propylene as an ingredient (propylene-based polymers). It may be a polypropylene resin composed substantially of one, two or more types of propylene polymer. As used herein, the concept of a propylene polymer encompasses, for example, polypropylenes such as the following:

propylene homopolymers (homopolypropylenes), such as isotactic polypropylene;
random copolymers (random polypropylenes) of propylene with another $\alpha$-olefin (typically, one, two or more selected from among ethylene and $\alpha$-olefins having from 4 to 10 carbons), preferably, random polypropylenes in which propylene is the primary monomer (i.e., an ingredient that accounts for at least 50% by mass of the overall monomer); for example, a random polypropylene obtained by the random copolymerization of from 96 to 99.9 mol % propylene and from 0.1 to 4 mol % of another $\alpha$-olefin (preferably ethylene and/or butene);.and,
block copolymers (block polypropylenes) which include a copolymer (preferably one in which propylene is the primary monomer) obtained by block-copolymerizing propylene with another $\alpha$-olefin (typically one, two or more selected from among ethylene and $\alpha$-olefins having 4 to 10 carbons), and typically include also as a byproduct a rubber component composed of propylene and at least one other $\alpha$-olefin, with examples including block polypropylenes containing a polymer obtained by copolymerizing from 90 to 99.9 mol % of propylene with from 0.1 to 10 mol % of another $\alpha$-olefin (preferably ethylene and/or butene), and containing also as a byproduct a rubber component composed of propylene and at least one other $\alpha$-olefin.

The above polypropylene resin may be one that is substantially composed of one, two or more such propylene polymers, or may be a thermoplastic olefin resin (TPO) or thermoplastic elastomer (TPE) of either a reactor blend-type obtained by copolymerizing a large amount of rubber ingredients in this propylene polymer or of a dry blend-type obtained by mechanically dispersing the rubber ingredient. Alternatively, it may be a polypropylene resin containing a copolymer of a monomer having both a polymerizable functional group and also another functional group (functional group-containing monomer) with propylene, or may be a polypropylene resin obtained by copolymerizing such a functional group-containing monomer with a propylene-based polymer.

The above polyethylene resin may be one that is composed primarily of various ethylene-containing polymers (ethylene-based polymers). The polyethylene resin may be composed substantially of one, two or more ethylene-based polymers. The ethylene-based polymer may be a homopolymer of ethylene or may be a polymer obtained by copolymerizing ethylene as the primary monomer with another $\alpha$-olefin (e.g., an $\alpha$-olefin having 3 to 10 carbons). Preferred examples of such $\alpha$-olefins include propylene, 1-butene, 1-hexene, 4-methyl-1-pentene and 1-octene. Alternatively, the polyethylene resin may be one which contains a copolymer of a monomer having both a polymerizable functional group and also another functional group (functional group-containing monomer) with ethylene, or a polyethylene resin obtained by copolymerizing such a functional group-containing monomer with an ethylene-based polymer. Illustrative examples of copolymers of ethylene and functional group-containing monomers include ethylene-vinyl acetate copolymers (EVA), ethylene-acrylic acid copolymers (EAA), ethylene-methacrylic acid copolymers (EMAA), ethylene-methyl acrylate copolymers (EMA), ethylene-ethyl acrylate copolymers (EEA), ethylene-methyl methacrylate copolymers (EMMA) and ethylene-(meth)acrylic acid (i.e., acrylic acid and/or methacrylic acid) copolymers that have been crosslinked with metallic ions.

No particular limitation is imposed on the density of the polyethylene resins. For example, the density may be from 0.9 to 0.94 g/cm$^3$ (typically, from 0.91 to 0.93 g/cm$^3$). Examples of preferred polyethylene resins include low-density polyethylene (LDPE) and linear low-density polyethylene (LLDPE).

The above substrate may contain, as secondary ingredients, resin ingredients other than polyethylene resins and polypropylene resins. Examples of such resin ingredients include polyolefin resins composed primarily of a polymer of an $\alpha$-olefin having 4 or more carbons (i.e., an olefin-based polymer in which the primary monomer is an $\alpha$-olefin of this type).

Preferred substrates in the present invention are exemplified by substrates wherein the resin component is substantially composed of a polyethylene resin and/or a polypropylene resin. The respective layers making up the substrate may be any of the following: a layer in which the resin component is composed solely of a polyethylene resin (PE layer), a layer composed solely of a polypropylene resin (PP layer), or a layer composed of a resin obtained by blending a polyethylene resin with a polypropylene resin in any ratio (PE-PP layer). For example, preferred use may be made of a substrate having, as the layer A and as one, two or more layers B, a plurality (preferably from two to four) of PE-PP layers containing a polyethylene resin and a polypropylene resin in differing blend ratios.

Where necessary, suitable ingredients (additives) whose inclusion in such a substrate is acceptable may be incorporated into the substrate of the protective sheet disclosed herein. Examples of such additives include inorganic weathering stabilizers, slip agents and antiblocking agents.

In a preferred embodiment, at least one resin layer making up the substrate (i.e., one, two or more layers selected from among the layer A and layer B) contains an inorganic weathering stabilizer. Generally, preferred use may be made of a substrate in which at least the layer B contains an inorganic weathering stabilizer. In cases where the layer B contains a plurality of layers, it is preferable for at least one of these layers to contain an inorganic weathering stabilizer, although it is possible for all the layers of the layer B to contain an inorganic weathering stabilizer. In a preferred embodiment, all of the layers making up the substrate contain an inorganic weathering stabilizer in the same or different concentrations. As used herein, "inorganic weathering stabilizer" denotes an inorganic material, typically an inorganic powder, whose function is to enhance the weather resistance of the paint film-protecting sheet. It is also possible for such inorganic materials to be thought of as inorganic pigments or fillers.

Preferred examples of inorganic weathering stabilizers include inorganic powders such as titanium oxide (typically rutile-type), zinc oxide and calcium carbonate. In applications which require long-term weather resistance outdoors (e.g., an outer paint film-protecting sheet on an automotive body), the use of titanium oxide is preferred. For example, preferred use may be made of a highly weather-resistant type of titanium oxide obtained by coating the surface of titanium oxide particles with $SiO_2Al_2O_3$. The amount of inorganic weathering stabilizer included may be suitably set by taking into consideration, for example, the extent of the effects obtained by such incorporation and the substrate formability and other properties for the resin sheet forming process (e.g., extrusion, cast molding). Generally, it is preferable to set the loadings of the inorganic weathering stabilizer (when a plurality of types are included, the combined amount thereof) to from 2% to 30% by mass (more preferably from 4% to 20% by mass; e.g., from 5% to 12% by mass) of the overall substrate. In cases where a plurality of layers contain inorganic weathering stabilizer, it is preferable for at least one of these layers to satisfy the above loading, although all of the layers may do so.

Each of the above additives may be used singly or as a combination of two or more types thereof. The loadings of additives for the substrate as a whole may be set to the same level as the loadings commonly employed in the field of resin sheets used as the substrate in paint film-protecting sheets (e.g., automotive paint film-protecting sheets). The types and amounts of additives included in the respective resin layers making up the substrate may differ for each layer or may be the same for some or all of the layers.

Also, in the art disclosed herein, to the extent that the objects of the invention (especially the low-staining character) are not compromised to any great degree, organic weathering stabilizers which do not conform to the organic weathering stabilizer as defined above, i.e., low-molecular-weight organic weather stabilizers (LMS) having a weight-average molecular weight below $1.5 \times 10^3$ (typically $1 \times 10^3$ or less, such as $0.5 \times 10^3$ or less) may be included in any layer of the substrate. However, it is preferable for the substrate to be constructed in such a way that at least the layer A contains no LMS, and more preferable for the layer A to contain neither LMS nor the organic weathering stabilizer.

The substrate may be manufactured by suitably employing an ordinary resin sheet (film) forming method that is already known. For example, film formation as a sheet may be carried out by an ordinary multilayer co-extrusion process using molding materials which contain the above-described resin components and optionally included additives, etc.

The thickness of the substrate is not subject to any particular limitation, and may be suitably selected according to the intended application. Generally, it is suitable to use a substrate having a thickness of approximately not more than 300 μm (e.g., from 10 μm to 200 μm). In one preferred embodiment of the protective sheet disclosed herein, the substrate thickness is from 20 μm to 100 μm (e.g., from 30 μm to 60 μm). Protective sheets obtained using a substrate of this thickness are suitable as, for example, automotive paint film-protecting sheets.

The thickness of the layer A may be set to 3 μm or more, and is preferably set to 5 μm or more. If the thickness of the layer A is too small, manufacturing a substrate in which the layer A uniformly covers the surface of the layer B will be difficult. As a result, holes may form in the layer A due to factors such as variability during substrate manufacture, leaving the layer B exposed at the surface of the PSA layer side and thus making it possible for the organic weathering stabilizer within the layer B to migrate to the PSA layer. Also, it is preferable to set the thickness of the layer A to not more than 50% (e.g., from 10% to 50%) of the overall thickness of the substrate. A layer A thickness which is too large as a proportion of the substrate thickness will result in a smaller layer B thickness as a proportion of the substrate thickness, which may tend to give the protective sheet an inadequate weather resistance.

Of the substrate 10 shown in FIG. 1, the surface 10a on the PSA layer side may be subjected to various types of surface treatment, such as acid treatment, corona discharge treatment, ultraviolet light irradiation treatment, plasma treatment, and primer application. If necessary, the back face 10b of the substrate 10 may be subjected to release treatment (e.g., treatment that involves applying a common silicone, long-chain alkyl, or fluorine-based release treatment agent in the form of a thin film having a thickness of typically from 0.01 μm to 0.1 μm).

The PSA layer provided in the protective sheet disclosed herein may be a PSA layer containing one, two or more kinds selected from various known PSAs, including rubber, acrylic, polyester, urethane, polyether, silicone, polyamide, fluorine, poly(a-olefin) or ethylene-vinyl acetate copolymer-based PSAs. In one preferred mode, the PSA layer is a rubber-based PSA layer formed from a PSA composition in which the base polymer (the chief ingredient among the polymer ingredients) is a rubber-based polymer. Illustrative examples of such base polymers include natural rubber; styrenebutadiene rubber (SBR); polyisoprene; butyl rubbers such as regular butyl rubber, chlorinated butyl rubber and brominated butyl rubber; isobutylene polymers such as polyisobutylene, isoprene-isobutylene copolymers and modified forms thereof; and A-B-A type block copolymer rubbers and hydrogenates thereof, such as styrenebutadiene-styrene block copolymer rubbers (SBS), styrene-isoprene-styrene block copolymer rubbers (SIS), styrene-vinyl/isoprene-styrene block copolymer rubbers (SVIS), styrene-ethylene-butylene-styrene block copolymer rubbers (SEBS) which are hydrogenates of SBS, and styrene-ethylene-propylene-styrene block copolymer rubbers (SEPS) which are hydrogenates of SIS.

In a preferred mode of the protective sheet disclosed herein, the protective sheet has a PSA layer composed of a polyisobutylene-based PSA that was formed from a PSA composition containing an isobutylene polymer as the base polymer. Because the polyisobutylene PSA has a large solubility parameter (SP value) difference with the paint film (e.g., automotive paint film), mass transfer does not easily arise between the two, and so attaching the protective sheet tends not to leave marks on the paint film. Also, the PSA layer has a high modulus of elasticity, which is desirable in a PSA for adhesive sheets used in embodiments such as paint film-protecting sheets that are eventually removed; i.e., a removable PSA.

The above isobutylene polymer may be an isobutylene homopolymer (homoisobutylene) or a copolymer in which the main monomer is isobutylene. The copolymer may be, for example, a copolymer of isobutylene and n-butylene, a copolymer of isobutylene and isoprene (e.g., regular butyl rubber, chlorinated butyl rubber, brominated butyl rubber, partially crosslinked butyl rubber), or a vulcanized form or modified form (e.g., one modified with functional groups such as hydroxyl groups, carboxyl groups, amino groups, or epoxy groups) thereof. From the standpoint of adhesive strength stability (e.g., the quality where the adhesive strength does not rise excessively over time or due to the heat history), examples of isobutylene polymers preferred for use include homoisobutylene and isobutylene-n-butylene copolymers. Of these, homoisobutylene is preferred.

The molecular weight of such isobutylene-polymers is not subject to any particular limitation. For example, such polymers having a weight-average molecular weight (Mw) of from $1 \times 10^4$ to $150 \times 10^4$ may be suitably selected and used. It is also possible to use in combination a plurality of isobutylene polymers of mutually differing weight-average molecular weights. The Mw of the isobutylene polymers used as a whole is preferably in a range of from $10 \times 10^4$ to $150 \times 10^4$, and more preferably from $30 \times 10^4$ to $100 \times 10^4$.

The above isobutylene polymer may be a peptized isobutylene polymer obtained by subjecting a higher molecular weight isobutylene polymer to peptizing treatment so as to lower the molecular weight (preferably to the above-indicated preferred weight-average molecular weight). Such peptizing treatment is preferably carried out so as to obtain an isobutylene polymer having a weight-average molecular weight Mw which is from 10% to 80% that prior to peptizing treatment. Alternatively, such treatment may be advantageously carried out so as to obtain an isobutylene polymer having a number-average molecular weight (Mn) of from $10 \times 10^4$ to $40 \times 10^4$. Such peptizing treatment may be performed based on the description provided in, for example, Japanese Patent No. 3878700.

The above polyisobutylene PSA may be composed of one, two or more kinds of base polymers selected from among such isobutylene polymers. In addition to this base polymer, the polyisobutylene PSA may contain as secondary ingredients polymers other than polyisobutylene polymers. Examples of such polymers other than polyisobutylene polymers include poly(meth)acrylic acid esters, polybutadiene, polystyrene, polyisoprene, polyurethane, polyacrylonitrile and polyamide. In general, it is preferable to set the content of such polymers other than polyisobutylene polymers to 10% by mass or less of the overall polymer ingredients included in the polyisobutylene-based PSA. A PSA containing substantially no polymer other than polyisobutylene polymer is also acceptable.

The PSA used in the protective sheet disclosed herein may contain, if necessary, suitable ingredients (additives) whose inclusion in such PSAs is acceptable. Examples of such additives include softeners, tackifiers and peeling aids. Additional examples include inorganic weathering stabilizers such as pigments and fillers; and organic weathering stabilizers such as light stabilizers (radical scavengers), ultraviolet absorbers and antioxidants. Each of these types of additives may be used singly or as a combination of two or more thereof. The loadings of additives included may be set to about the same as the ordinary loadings in the field of PSAs for paint film-protecting sheets (e.g., automotive paint film-protecting sheets).

Preferred examples of tackifiers that may be used include alkyl phenol resins, terpene phenol resins, epoxy resins, coumarone indene resins, rosin resins, terpene resins, alkyd resins, and hydrogenates thereof. When a tackifier is used, the loading thereof may be set to, for example, from approximately 0.1 to 50 parts by weight, per 100 parts by weight of the base polymer. Generally, it is preferable for the amount of tackifier included to be set to from 0.1 to 5 parts by weight per 100 parts by weight of the base polymer. Alternatively, the PSA may have a composition which is substantially free of tackifier.

Examples of softeners include low-molecular-weight rubber materials, process oils (typically paraffinic oils), petroleum-based softeners and epoxy compounds. Examples of peeling aids include silicone-based peeling aids, paraffinic peeling aids, polyethylene wax and acrylic polymers. When a peeling aid is used, the loading thereof may be set to, for example, from 0.01 to 5 parts by weight per 100 parts by weight of the base polymer. Alternatively, the PSA may have a composition which is substantially free of peeling aid. Inorganic weathering stabilizers that may be used include inorganic powders such as titanium oxide, zinc oxide, calcium oxide, magnesium oxide and silica. Examples of light stabilizers include those containing HALS as active ingredients, examples of ultraviolet absorbers include those containing benzotriazoles as active ingredients, and examples of antioxidants include those containing benzophenols and sulfur compounds as active ingredients.

The thickness of the PSA layer is not subject to any particular limitation, and may be suitably set according to the intended object. Generally, a thickness of up to 100 $\mu$m (e.g., from 1 $\mu$m to 100 $\mu$m) is appropriate, a thickness from 1 $\mu$m to 50 $\mu$m is preferred, and a thickness of from 3 $\mu$m to 20 $\mu$m is more preferred. For example, the above range may be preferably used as the PSA layer thickness in an automotive paint film-protecting sheet.

Formation of the PSA layer may be carried out in general accordance with known methods of forming PSA layers in adhesive sheets. For example, preferred use may be made of a direct process wherein a PSA composition of a PSA layer-forming material containing the polymer ingredients and any additives to be optionally included which is dissolved or dispersed in a suitable solvent is furnished (e.g., prepared or purchased), and the composition is directly applied (typically coated) onto a substrate and dried to form the PSA layer. Alternatively, use may be made of a transfer process wherein the above PSA composition is applied onto a surface having good peelability (e.g., the surface of a peeling liner, or the release-treated back face of the substrate) and dried, thereby forming a PSA layer on the surface, following which the PSA layer is transferred to a substrate. This PSA layer is typically formed continuously although, depending on the intended object and use thereof, it may be formed in a regular (e.g., dotted or striped) pattern or in a random pattern.

Even though it is not necessary to explain the reason why excellent effects like those described above are achieved in working the present invention, the reason is conjectured to be as follows. Organic weathering stabilizers, particularly hindered amine-type light stabilizers (HALS), when present at the surface on the PSA layer side of the substrate, readily migrate into the PSA layer. Particularly in a protective sheet having a PSA layer obtained by coating a solvent-based PSA composition onto the substrate, there is a concern that the weathering stabilizer in the substrate will be leached out by the solvent and migrate into the PSA layer. When the stabilizer in the PSA layer migrates to the surface of the adherend (paint film), it will be confirmed as a contaminant upon removal of the protective sheet. In protective sheets which are affixed to a rather strongly acidic paint film (e.g., a carboxyl group/epoxy group-crosslinked type paint film), the transfer of basic substances such as HALS to the paint film side may be promoted due to acid-base interactions, as a result of which contamination by this substance will tend to arise with particular ease.

An organic weathering stabilizer having a relatively high molecular weight (Mw of at least $1.5 \times 10^3$) (organic weathering stabilizer) is used in the present invention. In a protective sheet where this stabilizer is present primarily in a portion of the substrate away from the surface on the PSA layer side thereof, even with the passage of time or exposure to elevated temperatures (e.g., in modes of use where the adherend to which the protective sheet has been affixed is allowed to stand outside in the summer), the organic weathering stabilizer will not readily migrate to the PSA layer. Also, because light stabilizers such as HALS exhibit effects by stabilization involving the capture of radicals generated by energy such as ultraviolet light, placing such a light stabilizer on the back side of the protective sheet (the side where light impinges) enables the utilization efficiency of the light stabilizer to be increased. In the present invention, by providing an organic weathering stabilizer concentration difference within the substrate that takes into account such mass transfer effects, a paint film-protecting sheet which exhibits a high weather resistance and also minimizes staining of the paint film and a substrate capable of being used in such a protective sheet are achieved.

EXAMPLES

Several examples of the invention are described below, although these examples are not intended to limit the scope of the invention. In the description that follows, unless noted otherwise, all references to "parts" and "%" are based on the weight of non-volatiles.

Preparation of Paint Film-Protecting Sheet

A paint film-protecting sheet 1 having a construction like that in FIG. 1 was prepared as described below.

Feedstock formulated in the weight ratios shown in Tables 1 and 2 below were melt mixed in a three-layer co-extrusion T-die film extruder, then discharged as a film with respective layer thicknesses (inner layer 12, middle layer 14 and outer layer 16) having the values indicated in the tables to produce a substrate 10 with a total thickness of 40 $\mu$m. The blending ratios in Tables 1 and 2 are shown in the following form: PP resin / PE resin / TiO$_2$ / organic weathering stabilizer. CHIMASSORB™ 944FDL (a HALS having a weight-average molecular weight of from 2000 to 3100 produced by Ciba Specialty Chemicals) was used as Organic Weather Stabilizer I. SANOL™ LS770 (a HALS having a molecular weight of 481 produced by Sankyo Lifetech Co., Ltd.) was used as Organic Weather Stabilizer II. A propylene homopolymer (produced by Japan Polypropylene Corporation under the trade name Novatec PP FY4) was used as the polypropylene resin. Linear low-density polyethylene (LLDPE) (produced by Nihon Polyethylene Corporation under the trade name Kernel KF 380) was used as the polyethylene resin. Rutile-type titanium dioxide coated with SiO$_2$Al$_2$O$_3$ (produced

by Ishihara Sangyo Kaisha, Ltd. under the trade name TIPAQUE CR-95) was used as the $TiO_2$. The thickness of each layer making up the substrate in each example was confirmed by electron microscopic observation.

A PSA composition was prepared by dissolving 75 parts of a polyisobutylene produced by BASF under the trade name Oppanol B-80 and 25 parts of a polyisobutylene produced by BASF under the trade name Oppanol B-12SFN in an organic solvent. This PSA composition was coated onto the inside layer surface 10a of the substrate 10 in each of the examples obtained as described above and dried, thereby producing a paint film-protecting sheet 1 having a 10 $\mu$m thick PSA layer 20 on the inside layer surface 10a.

Each of these protective sheets was tested as described below to evaluate the weather resistance and staining tendency. The results are shown collectively in Tables 1 and 2.

Weathering Resistance

The protective sheets obtained in the respective examples were cut into 10 mm wide strips to form test specimens. Each test specimen was pressure-bonded to a plate painted with polyester melamine having a glass transition temperature of 60°C, which bonding was carried out by passing a 2 kg roller once back-and-forth over the specimen at a speed of 0.3 m/min in a 23°C, 65% RH atmosphere. In general accordance with JIS D0205, the painted plate to which a specimen had been affixed was placed for 1000 hours in a Sunshine Carbon Weather Meter (Suga Test Instruments Co., Ltd.), then left to stand for 1 hour in a 23°C, 65% RH atmosphere, following the specimen was peeled off in the 180° direction from one end of the specimen to a length of 100 mm at a peel rate of 30 m/min. The results were rated according to the following criteria.

Excellent (E): The specimen peeled off very well without tearing.
Good (G): The specimen peeled off well without tearing.
Poor (P): The specimen tore off partway due to deterioration of the substrate.

Staining Tendency

The protective sheet in each example was cut into square pieces measuring 100 mm on a side, thereby preparing test specimens. Each test specimen was pressure-bonded to a black acrylic melamine-painted plate by passing a 2 kg roller once back-and-forth over the specimen at a speed of 0.3 m/min in a 23°C, 65% RH atmosphere. The painted plate to which a specimen had been affixed was left to stand in a 70°C atmosphere for 144 hours, then left to stand for 1 hour in a 23°C, 65% RH atmosphere, following which it was peeled from the painted plate in the 180° direction at a peel rate of 0.3 m/min. Immediately after peeling, the stained condition (presence or absence of whitening) of the surface of the painted plate (paint film surface) was visually examined under sunlight and under an indoor fluorescent lamp. The results were rated according to the following criteria.

Excellent (E): No staining whatsoever is observable under sunlight and under a fluorescent lamp.
Good (G): Slight staining is observable under sunlight or a fluorescent lamp, but is of a degree that is acceptable for practical purposes.
Intermediate (I): Staining is not observable under a fluorescent lamp, but is observable under sunlight.
Poor (P): Distinct staining is observable under sunlight or a fluorescent lamp.
Very Poor (VP): Distinct staining is observable under both sunlight and a fluorescent lamp.

Table 1

| | | Example 1 | Example 2 | Example 3 |
|---|---|---|---|---|
| Formulation (weight ratio) | Inner layer A (10 $\mu$m) | 60/30/10/0 | 60/30/10/0.05 | 60/30/1 0/0.05 |
| | Middle layer B1 (20 $\mu$m) | 70/20/10/0.2 | 70/20/10/0.2 | 70/20/10/0.15 |
| | Outer layer B2 (10 $\mu$m) | 60/30/10/0.2 | 60/30/1 0/0.2 | 60/30/1 0/0.1 |
| Weathering stabilizer | Type | I | I | I |
| | Mw | 2000 to 3100 | 2000 to 3100 | 2000 to 3100 |
| Weathering resistance | | E | E | G |
| Staining tendency | | E | G | G |

Table 2

| | | Example 4 | Example 5 | Example 6 | Example 7 |
|---|---|---|---|---|---|
| Formulation (weight ratio) | Inner layer A (10 μm) | 60/30/10/0 | 60/30/10/0.05 | 60/30/10/0.2 | 60/30/10/0.05 |
| | Middle layer B1 (20 μm) | 70/20/10/0.2 | 70/20/1 0/0.2 | 70/20/10/0.2 | 70/20/1 0/0.05 |
| | Outer Layer B2 (10 μm) | 60/30/1 0/0.2 | 60/30/10/0.2 | 60/30/10/0.2 | 60/30/10/0.05 |
| Weathering stabilizer | Type | II | II | I | I |
| | Mw | 481 | 481 | 2000 to 3100 | 2000 to 3100 |
| Weathering resistance | | E | E | E | P |
| Staining tendency | | VP | VP | P | G |

As shown in these tables, the paint film-protecting sheets in Examples 1 to 3 which were produced using a substrate that contains a high-molecular-weight HALS (Weathering Stabilizer I) and satisfied the condition Pa/Pb ≤ 0.5 had an excellent weathering resistance and were also very low-staining. The protective sheet in Example 1 which contained no HALS in the inner layer (layer A) was observed to stain the paint film even less than the protective sheets in Examples 2 and 3.

In the paint film-protecting sheets of Examples 6 and 7, wherein each layer contained high-molecular-weight HALS in the same concentration, it was impossible to achieve a good balance between a high weathering resistance and low staining of the paint film. That is, at a low HALS content, the weathering resistance was inadequate (Example 7), but when the content of high-molecular-weight HALS was increased to enhance the weather resistance, staining of the paint film arose (Example 6). As for protective sheets that used a low-molecular-weight HALS (Weathering Stabilizer II), in Example 5 where the HALS concentration of each layer of the substrate was made the same as in Example 2, it was impossible to prevent staining; and in Example 4 where the inner layer contained no HALS, staining of the paint film was observed. The reason appears to be that, in the above staining tests, low-molecular-weight HALS within the layer B (middle layer, outer layer) migrated (diffused) to the layer A, and additionally migrated from the layer A to the PSA layer, ultimately staining the paint film.

The paint film-protecting sheet of the invention may be advantageously used in applications where it is affixed to the paint film on articles to be protected (examples of which include articles having a paint film formed by the above-mentioned painting treatment, such as an automotive bodies and automotive components, or sheet metal such as sheet steel and shaped articles thereof) which have been painted with paints of various compositions, such as polyester, alkyd, melamine or urethane-based paints or paints based on combinations thereof, so as to protect the paint film from the impact of very small bodies or contact with chemicals. Such sheets are especially suitable as protective sheets for automobiles (e.g., for the outer paint film on automotive bodies), which have a high likelihood of being stored outdoors for extended periods of time or of being transported to tropical regions or regions of various other climates and which are subject to high requirements concerning the appearance and decorativeness of the paint film.

## Claims

1.    A paint film-protecting sheet comprising:

a sheet-like substrate; and
a pressure-sensitive adhesive layer disposed on
the substrate,
the substrate comprising a resin layer (layer A) which forms a surface of the substrate on a pressure-sensitive adhesive layer side and one, two or more resin layers (layers B) superimposed on a back side of the layer A,
wherein layer A and layer B are primarily composed of a polyolefin or a polyester,
the layer B containing an organic weathering stabilizer having a weight-average molecular weight Mw of at least $1.5 \times 10^3$ in a predetermined amount Pb,
the layer A being free of the organic weathering stabilizer or containing the same in a predetermined amount Pa which satisfies the condition Pa/Pb ≤ 0.5,
wherein the amount Pb of the organic weathering stabilizer in the layer B is from 0.1% by mass to 5% by mass.

2.    The sheet according to claim 1, wherein the organic weathering stabilizer is a hindered amine-type light stabilizer.

3. The sheet of any one of claim 1 or 2, wherein the amount Pa of the organic weathering stabilizer in the layer A is not more than 0.1% by mass.

4. The sheet according to any one of claims 1 to 3, wherein the combined amount of the organic weathering stabilizer included in the substrate, expressed as a proportion Pt of the total mass of the substrate, is at least 0.07% by mass.

5. The sheet according to any one of claims 1 to 4, wherein the layer A has a thickness of at least 5 $\mu$m.

6. The sheet according to any one of claims 1 to 5, wherein the layer A contains at least 50% by mass of polyethylene resin and/or polypropylene resin.

7. The sheet according to any one of claims 1 to 6, wherein at least one layer of the substrate includes an inorganic weathering stabilizer.

8. The sheet according to any one of claims 1 to 7, wherein the pressure-sensitive adhesive layer is formed of a polyisobutylene-based pressure-sensitive adhesive.

9. A substrate for use as a constituting component of a paint film-protecting sheet,
the substrate comprising a resin layer (layer A) which forms a surface of the substrate and a resin layer (layer B) superimposed on a back side of the layer A, wherein layer A and layer B are primarily composed of a polyolefin or a polyester,
the layer B containing an organic weathering stabilizer having a weight-average molecular weight Mw of at least $1.5\times10^3$ in a predetermined amount Pb,
the layer A being free of the organic weathering stabilizer or containing the same in a predetermined amount Pa which satisfies a condition Pa/Pb $\leq$ 0.5, and
wherein the amount Pb of the organic weathering stabilizer in the layer B is from 0.1% by mass to 5% by mass.

**Patentansprüche**

1. Anstrichfilm- bzw. Lackfilmschutzfolie umfassend:

ein folienartiges Substrat; und
eine Haftklebstoffschicht, die auf dem Substrat angeordnet ist,
wobei das Substrat eine Harzschicht (Schicht A), welche eine Oberfläche des Substrats auf einer Seite der Haftklebstoffschicht bildet, und eine, zwei oder mehr Harzschichten (Schichten B), die auf einer Rückseite der Schicht A aufgebracht sind, umfasst, wobei Schicht A und Schicht B hauptsächlich aus einem Polyolefin oder einem Polyester zusammengesetzt sind,
wobei die Schicht B einen organischen Witterungsstabilisator mit einem Gewichtsmittel des Molekulargewichts Mw von wenigstens 1,5 x $10^3$ in einer vorbestimmten Menge Pb enthält,
wobei die Schicht A frei von dem organischen Witterungsstabilisator ist oder denselben in einer vorbestimmten Menge Pa enthält, welche die Bedingung Pa/Pb $\leq$ 0,5 erfüllt,
wobei die Menge Pb des organischen Witterungsstabilisators in der Schicht B 0,1 Masse% bis 5 Masse% beträgt.

2. Folie gemäß Anspruch 1, wobei der organische Witterungsstabilisator ein Lichtstabilisator vom gehinderten Amin-Typ ist.

3. Folie nach einem der Ansprüche 1 oder 2, wobei die Menge Pa des organischen Witterungsstabilisators in der Schicht A nicht mehr als 0,1 Masse% beträgt.

4. Folie gemäß einem der Ansprüche 1 bis 3, wobei die kombinierte Menge des organischen Witterungsstabilisators, der in dem Substrat eingeschlossen ist, angegeben als ein Anteil Pt der Gesamtmasse des Substrats, wenigstens 0,07 Masse% beträgt.

5. Folie gemäß einem der Ansprüche 1 bis 4, wobei die Schicht A eine Dicke von wenigstens 5 $\mu$m aufweist.

6. Folie gemäß einem der Ansprüche 1 bis 5, wobei die Schicht A wenigstens 50 Masse% Polyethylenharz oder Polypropylenharz enthält.

**7.** Folie gemäß einem der Ansprüche 1 bis 6, wobei wenigstens eine Schicht des Substrats einen anorganischen Witterungsstabilisator einschließt.

**8.** Folie gemäß einem der Ansprüche 1 bis 7, wobei die Haftklebstoffschicht aus einem Haftklebstoff auf Polyisobutylenbasis gebildet ist.

**9.** Substrat zur Verwendung als eine konstituierende Komponente einer Anstrichfilm- bzw. Lackfilmschutzfolie, wobei das Substrat eine Harzschicht (Schicht A), welche eine Oberfläche des Substrats bildet, und eine Harzschicht (Schicht B), die auf einer Rückseite der Schicht A aufgebracht ist, umfasst, wobei Schicht A und Schicht B hauptsächlich aus einem Polyolefin oder einem Polyester zusammengesetzt sind,
wobei die Schicht B einen organischen Witterungsstabilisator mit einem Gewichtsmittel des Molekulargewichts Mw von wenigstens $1{,}5 \times 10^3$ in einer vorbestimmten Menge Pb enthält,
wobei die Schicht A frei von dem organischen Witterungsstabilisator ist oder denselben in einer vorbestimmten Menge Pa enthält, welche die Bedingung Pa/Pb $\leq$ 0,5 erfüllt, und
wobei die Menge Pb des organischen Witterungsstabilisators in der Schicht B 0,1 Masse% bis 5 Masse% beträgt.

**Revendications**

**1.** Feuille de protection de film de peinture comprenant :

un substrat de type feuille ; et
une couche d'adhésif sensible à la pression disposée sur le substrat,
le substrat comprenant une couche de résine (couche A) qui forme une surface du substrat sur un côté de couche d'adhésif sensible à la pression et une, deux couches de résine (couches B) ou plus superposées sur un côté arrière de la couche A, la couche A et la couche B étant principalement composées d'une polyoléfine ou d'un polyester,
la couche B contenant un agent stabilisant organique contre l'altération due aux agents atmosphériques ayant une masse moléculaire moyenne en poids Mw d'au moins $1{,}5 \times 10^3$ en une quantité prédéterminée Pb,
la couche A étant dépourvue de l'agent stabilisant organique contre l'altération due aux agents atmosphériques ou le contenant en une quantité prédéterminée Pa qui satisfait la condition Pa/Pb $\leq$ 0,5,
la quantité Pb de l'agent stabilisant organique contre l'altération due aux agents atmosphériques dans la couche B allant de 0,1 % en masse à 5 % en masse.

**2.** Feuille selon la revendication 1, dans laquelle l'agent stabilisant organique contre l'altération due aux agents atmosphériques est un agent photo-stabilisant de type amine encombrée.

**3.** Feuille selon l'une quelconque de la revendication 1 ou 2, dans laquelle la quantité Pa de l'agent stabilisant organique contre l'altération due aux agents atmosphériques dans la couche A n'est pas supérieure à 0,1 % en masse.

**4.** Feuille selon l'une quelconque des revendications 1 à 3, dans laquelle la quantité combinée de l'agent stabilisant organique contre l'altération due aux agents atmosphériques inclus dans le substrat, exprimée en tant que proportion Pt de la masse totale du substrat, est d'au moins 0,07 % en masse.

**5.** Feuille selon l'une quelconque des revendications 1 à 4, dans laquelle la couche A a une épaisseur d'au moins 5 $\mu$m.

**6.** Feuille selon l'une quelconque des revendications 1 à 5, dans laquelle la couche A contient au moins 50 % en masse de résine de polyéthylène et/ou de résine de polypropylène.

**7.** Feuille selon l'une quelconque des revendications 1 à 6, dans laquelle au moins une couche du substrat inclut un agent stabilisant inorganique contre l'altération due aux agents atmosphériques.

**8.** Feuille selon l'une quelconque des revendications 1 à 7, dans laquelle la coche d'adhésif sensible à la pression est formée d'un adhésif sensible à la pression à base de polyisobutylène.

**9.** Substrat destiné à être utilisé en tant que composant constitutif d'une feuille de protection de film de peinture, le substrat comprenant une couche de résine (couche A) qui forme une surface du substrat et une couche de résine (couche B) superposée sur un côté arrière de la couche A, la couche A et la couche B étant principalement composées d'une polyoléfine ou d'un polyester,
la couche B contenant un agent stabilisant organique contre l'altération due aux agents atmosphériques ayant une masse moléculaire moyenne en poids Mw d'au moins $1,5 \times 10^3$ en une quantité prédéterminée Pb,
la couche A étant dépourvue de l'agent stabilisant organique contre l'altération due aux agents atmosphériques ou le contenant en une quantité prédéterminée Pa qui satisfait la condition Pa/Pb ≤ 0,5,
la quantité Pb de l'agent stabilisant organique contre l'altération due aux agents atmosphériques dans la couche B allant de 0,1 % en masse à 5 % en masse.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H673352 B
- JP H8143838 B
- US 6872447 B
- US 2005084640 A
- JP 3878700 B